# EUROPÄISCHE PATENTSCHRIFT

(11) **EP 1 360 085 B1**
(45) Veröffentlichungstag und Bekanntmachung des Hinweises auf die Patenterteilung: **26.10.2005**
(21) Anmeldenummer: 02700216.1
(22) Anmeldetag: 08.02.2002
(51) Int. Cl.: B60N 2/22, B64D 11/06

(54) **Sitz, insbesondere Fahrzeugsitz, vorzugsweise Fluggastsitz**
Seat, in particular a Vehicle Seat, preferably an Airplane Seat
Siège, en particulier siège de véhicule, de préférence siège passager d'avion

(30) Priorität: 16.02.2001 DE 10107196
(43) Veröffentlichungstag der Anmeldung: 12.11.2003
(73) Patentinhaber: Recaro Aircraft Seating GmbH & Co. KG, 74523 Schwäbisch Hall (DE)
(72) Erfinder: WAGNER, Wolfgang, 88048 Friedrichshafen (DE); BAUMANN, Jürgen, 78351 Bodman-Ludwigshafen (DE)
(74) Vertreter: Bartels, Martin Erich Arthur
(86) Internationale Anmeldenummer: PCT/EP2002/001310
(87) Internationale Veröffentlichungsnummer: WO 2002/066283

(56) Entgegenhaltungen:
- EP-A- 0 018 274
- DE-A- 3 335 486
- FR-A- 691 602
- GB-A- 1 419 812
- US-A- 5 360 256

## Beschreibung

Die Erfindung betrifft einen Sitz, insbesondere Fahrzeugsitz, vorzugsweise Fluggastsitz, mit den Merkmalen des Oberbegriffes des Patentanspruches 1.

Ein dahingehender Fluggastsitz ist in der nachveröffentlichten DE 199 44 620 beschrieben. Der genannte Fluggastsitz besteht aus einzelnen Sitzteilen einschließlich einer Beinauflage und einer Rückenlehne. Die genannten Sitzteile sind mittels Stellantrieben bewegbar, die von einer von Hand ansteuerbaren Betätigungseinrichtung zum Einstellen des Sitzes an die Belange des jeweiligen Sitzbenutzers ansteuerbar sind. Dabei sind für die Sitzteile den Konturen dieser Sitzteile nachempfundene Griffhebel als Teil der Betätigungseinrichtung vorhanden, die für eine Einstellung des Fluggastsitzes in einem Bedienteil zusammengefaßt eine sinnfällige Einstellung für die Sitzteile ergeben.

Bei allen bekannten Neigungseinstelleinrichtungen für die Sitzteite, wie Rückenlehne oder Beinauflage, kann es in Abhängigkeit von der jeweils eingesetzten Betätigungs- und Neigungseinstelleinrichtung zu Hemmnissen kommen, da regelmäßig die Betätigungseinrichtung punktuell nur an einer Stelle der Rückenlehne und/oder der Beinauflage angreift, was zu einer wenn auch geringen Verwindung oder Torsion des weiteren in der Neigung einzustellenden Sitzteils führt, so daß eine gleichmäßige Verschwenkbewegung mit einem guten Körpergefühl für den Sitzbenutzer nicht erreichbar ist. Auch kommt es in Abhängigkeit der zum Einsatz kommenden Einstellkonstruktion im Crashfall zu einer einseitigen Belastung der Betätigungseinrichtung, insbesondere in Form des Stellantriebes, wobei letzterer häufig nicht in der Lage ist, die schlagartig auftretenden Kräfte abzufangen.

Durch die DE-A-33 35 486 A1 ist eine gattungsgemäße Vorrichtung zur Einstellung der Höhe und der Rückenlehnenneigung eines Sitzes, insbesondere eines Fahrzeugsitzes bekannt. Zur wahlweisen Einstellung der Neigung einer Rückenlehne oder der Höhe des gesamten Sitzes mittels einer einzigen Antriebsspindel besteht diese in der Art eines Winkeltriebes aus zwei Spindelteilen, die jeweils ein mit einem Kegelrad an Spindeln individueller Einstellmechaniken zusammenwirkendes Gegenkegelrad drehfest tragen und nur einer bestimmten relativen axialen Lage über Zahnkränze drehfest verbunden sind. In dieser Stellung kämmt nur ein Gegenkegelrad mit dem zugeordneten Kegelrad während in einer anderen relativen axialen Lage der beiden Antriebsspindelteile beide Gegenkegelräder mit den zugeordneten Kegelrädern kämmen aber die drehfeste Verbindung zwischen den beiden Antriebsspindelteilen aufgehoben ist. Zum Erhalt der dahingehenden axialen Lageänderung dient eine Aktuatoreinrichtung, die als längsverfahrbares Betätigungsteil ein Handrad aufweist, das in der einen Stellung einen ersten Winkeltrieb ansteuert und in der anderen Stellung einen zweiten, so daß dergestalt einmal die Neigungseinstellung und einmal die Höheneinstellung veranlaßt ist. Insoweit greifen auch bei der bekannten Lösung die beiden Winkeltriebe in Form der Kegelradpaare an Einstellteilen für die Neigungs- und Höhenlageeinstellung an und als mechanische Kopplung dient ein Zahnkranzpaar, das mittels des Handrades in eine Freigabestellung verschoben, den einen Winkeltrieb außer Funktion nimmt und den anderen funktionsbereit werden läßt.

Die bekannte Getriebelösung weist eine Vielzahl von rechtwinklig ineinandergreifenden Kegelrädern auf, so daß die bekannte Lösung relativ viel Bauraum am jeweiligen Fahrzeugsitz einnimmt und im übrigen auch entsprechend schwer ist. Ferner ist die Lösung aufgrund der Vielzahl der eingesetzten Bauteile konstruktiv aufwendig und mithin teuer in der Herstellung.

Durch die DE-A-34 12 047 A1 ist eine Vorrichtung zum Einstellen der Neigung der Rückenlehne eines Sitzes bekannt, insbesondere für Kraftfahrzeuge, dessen Lehnenrahmen mit zwei seitlich angeordneten Drehbeschlägen über Zwischentriebe von einer Antriebswelle angetrieben wird, die im Sitzrahmen gelagert ist und über einen Zahnriementrieb von einem am vorderen Ende des Sitzrahmens gelagerten Handrad aus angetrieben wird. Hierdurch ist in der Lehne keine durchgehende Welle erforderlich, und das Handrad für den Antrieb der Sitzlehneneinstellung befindet sich an einer günstigen, leicht erreichbaren Stelle. Da die Zahnriementriebe mit ihren Antriebsrädern und Wellen grundsätzlich einem gewissen Schlupfverhalten unterliegen, ist eine gleichförmige und gleichmäßige Ansteuerung der Einstellbewegung an den beiden Längsseiten der Rückenlehne nicht gegeben, und mit Hemmungen im Betrieb ist zu rechnen. Ferner weisen die bekannten und vorstehend genannten Lösungen den Nachteil auf, daß sie kaum geeignet sind, im Crashfall die auftretenden Belastungsspitzen sicher in die Sitzgrundkonstruktion des Sitzes aufzunehmen, sofern dieser im Fahrzeugbereich, insbesondere im Flugzeugbereich, eingesetzt wird.

Ausgehend von diesem Stand der Technik (d.h., insbesondere von e.g. gattungsbildender DE-A-33 35 486) liegt der Erfindung die Aufgabe zugrunde, die bekannten Sitze derart weiter zu verbessern, daß ein hemmfreier und gleichförmiger Neigungseinstellbetrieb für das gesamte weitere Sitzteil, wie Rückenlehne oder Beinauflage, erreicht ist und daß auch im Crashfall bei auftretenden Belastungsspitzen diese sicher von der Sitzkonstruktion des Fahrzeugsitzes, auch in Form eines Fluggastsitzes, aufgenommen werden können. Ferner soll eine leicht aufbauende und kostengünstige Neigungseinstellung realisiert werden. Eine dahingehende Aufgabenstellung löst ein Sitz mit den Merkmalen des Patentanspruches 1.

Dadurch, daß gemäß dem kennzeichnenden Teil des Patentanspruches 1 der jeweilige Winkeltrieb zwei Winkelarme aufweist, von denen der eine Arm an dem Einstellteil angelenkt ist und der jeweils andere Arm eine Angriffsstelle für die Kopplung aufweist und daß zwischen den beiden Armen eines jeden Winkeltriebes eine Schwenkstelle mit Teilen des Sitzrahmengestells besteht, um die die Winkeltriebe schwenkbar gehalten sind, ist eine gleichförmige Neigungseinstellung für das weitere Sitzteil, wie Rückenlehne und/oder Beinauflage, erreicht.

Aufgrund der mechanischen Kopplung lassen sich die genannten Sitzteile über ihre gesamte Breite gleichförmig verschwenken und mithin um eine jeweils gemeinsame Schwenkachse in der Neigung einstellen, so daß eine einseitige Krafteinleitung mit ihren negativen Auswirkungen vermieden ist. Da aufgrund der gleichförmigen Krafteinleitung über die beiden Einstellteile und die mechanische Kopplung zwischen diesen beiden Teilen Torsionskräfte innerhalb des weiteren Sitzteils und mithin eine Verwindung desselben vermieden ist, ist auch eine Belastung auf die die Schwenkachse bildenden Gelenkstellen vermieden, über die das weitere Sitzteil, wie Rückenlehne oder Beinauflage, an dem eigentlichen Sitzteil des Sitzes angelenkt ist. Des weiteren erlaubt die mechanische Kopplung eine Entlastung der Betätigungseinrichtung, beispielsweise in Form des Stellantriebes, so daß Belastungsspitzen im Crashfall durch die mechanische Kopplung unmittelbar aufgenommen und in das Sitzrahmengestell abgeleitet werden können. Die erfindungsgemäße Lösung baut leicht auf, was ihren Einsatz im Flugzeugbereich besonders sinnvoll erscheinen läßt, und ist im übrigen kostengünstig in der Herstellung und aufgrund der mechanischen Lösung ist mit geringen Wartungskosten und Ausfällen zu rechnen.

Die eingesetzten Aktuatoreinrichtungen sind kostengünstig auf dem Markt erhältlich und sicher im Betrieb. Des weiteren ist es hierdurch möglich, über den genannten Winkeltrieb eine kleine Bewegung des Aktuators oder Stellantriebes in einen entsprechenden Verstellweg für das Einstellteil umzusetzen, so daß eine gleichförmige und sinnfällige Neigungseinstellung für das weitere Sitzteil erreicht ist. Des weiteren erlaubt der Winkeltrieb eine Umlenkung der Krafteinleitung über das Betätigungsteil, vorzugsweise in Form einer Betätigungsstange der Aktuatoreinrichtung in Richtung des Einstellteils in einem nahezu rechten Winkel, so daß trotz der beengten Einbauverhältnisse innerhalb des Sitzrahmengestells eine sichere zielgerichtete Neigungseinstellung möglich ist.

Bei einer bevorzugten Ausführungsform des erfindungsgemäßen Sitzes besteht die mechanische Zwangskopplung aus einem starren Bauteil, das mit den Winkeltrieben gelenkig verbunden ist. Eine im Crashfall über die genannten Einstellteile eingeleitete Belastungssituation kann mithin sicher über das starre Bauteil unter Entlastung des Aktuators aufgenommen werden. Vorzugsweise erstreckt sich dabei das starre Bauteil als mechanische Kopplung quer zur Längsrichtung des Sitzes, um dergestalt die Grundkontur des Sitzrahmengestells aufgespannt zu halten, was die passive Sicherheit für den Sitz deutlich erhöht.

Bei einer weiteren bevorzugten Ausführungsform des erfindungsgemäßen Sitzes ist das Aktuatorgehäuse starr mit dem Sitzrahmengestell für das Sitzteil verbunden oder an dem weiteren Winkeltrieb angelenkt. Im letztgenannten Fall führt ein Betätigen des Aktuators gleichermaßen zu einer Einstellbewegung von Aktuatorgehäuse und Betätigungsstange, so daß mit nur einem Betätigungsvorgang über diese beiden genannten Teile ein doppelt so großer Einstellweg für die Winkeltriebe zurücklegbar ist. Vorzugsweise ist für einen sicheren Betrieb vorgesehen, daß das Aktuatorgehäuse starr am Sitzrahmengestell festgehalten ist und nur über die Betätigungsstange und die mechanische Kopplung der Antrieb für die Winkeltriebe mit den Einstellteilen erfolgt.

Die genannte Neigungseinstellvorrichtung läßt sich dem Grunde nach für alle Sitzteile eines Sitzes einsetzen, die in ihrer Neigung vorzugsweise einzustellen sind. Als besonders vorteilhaft hat es sich jedoch erwiesen, die Neigungseinstellvorrichtung für eine Neigungseinstellung der Rückenlehne eines Fluggastsitzes zum Einsatz zu bringen.

Weitere vorteilhafte Ausführungsformen des erfindungsgemäßen Sitzes sind Gegenstand der weiteren Unteransprüche.
Der genannte Sitz läßt sich in seiner erfindungsgemäßen Ausgestaltung auch als medizinischer Behandlungsstuhl im Operationsbereich sowie bei Zahnärzten, aber auch als Kosmetikstuhl u. dgl. mehr, einsetzen.

Im folgenden wird der erfindungsgemäße Sitz jedoch anhand einer Ausführungsform eines Fluggastsitzes nach der Zeichnung näher erläutert. Der erfindungsgemäße Sitz läßt sich aber nicht nur sinnvoll im Flugzeug einsetzen, sondern auch auf Fährschiffen, Reiseschiffen, Omnibussen und dergleichen mehr.

Dabei zeigen in prinzipieller und nicht maßstäblicher Darstellung sowie ausschnittsweise die
- Fig.1: eine Seitenansicht auf den Sitzgestellrahmen eines Fluggast- sitzes ohne Beinauflage und mit nur teilweise dargestellter Rückenlehnenmechan ik;
- Fig.2: in perspektivischer Ansicht einen Teil des Sitzrahmengestells für den Sitz nach der Fig.1 mit Neigungseinstellung für eine im einzelnen nicht näher dargestellte Rückenlehne;
- Fig.3: eine Draufsicht auf den Ausschnitt eines Sitzrahmengestells nach der Fig.2, nachdem dieses in Blickrichtung auf die Fig.2 um seine strichliniert dargestellte Längsachse "X" wie angege- ben im Uhrzeigersinn um 180° verschwenkt worden ist;
- Fig.4: eine Seitendarstellung auf den Ausschnitt des Sitzrahmenge- stells in mit "Y" gekennzeichneter Pfeilrichtung nach der Dar- stellung gemäß Fig.3.

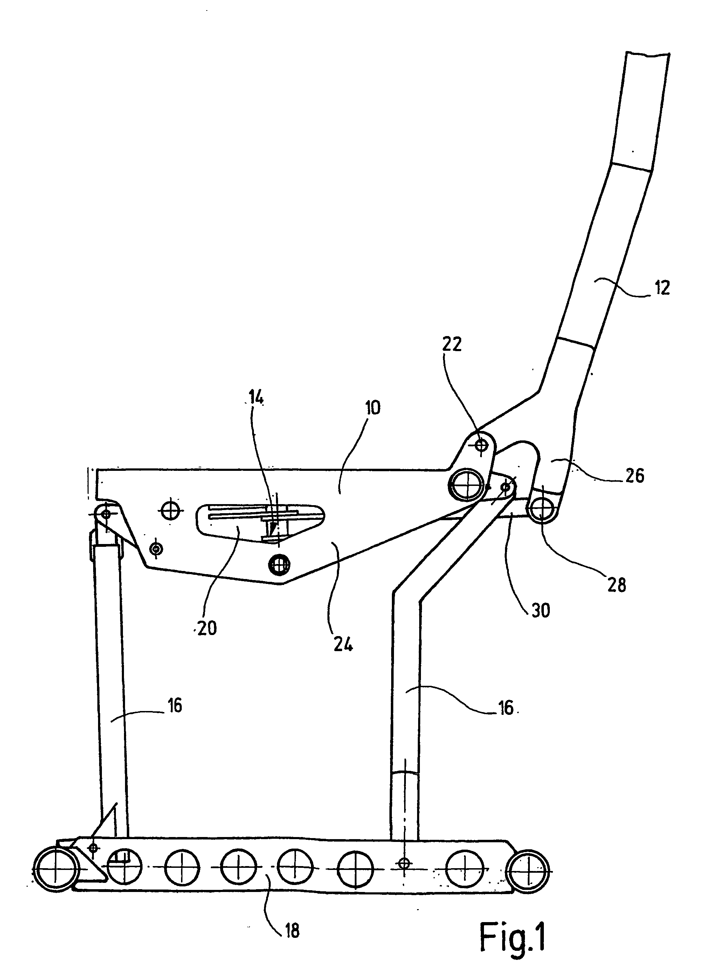

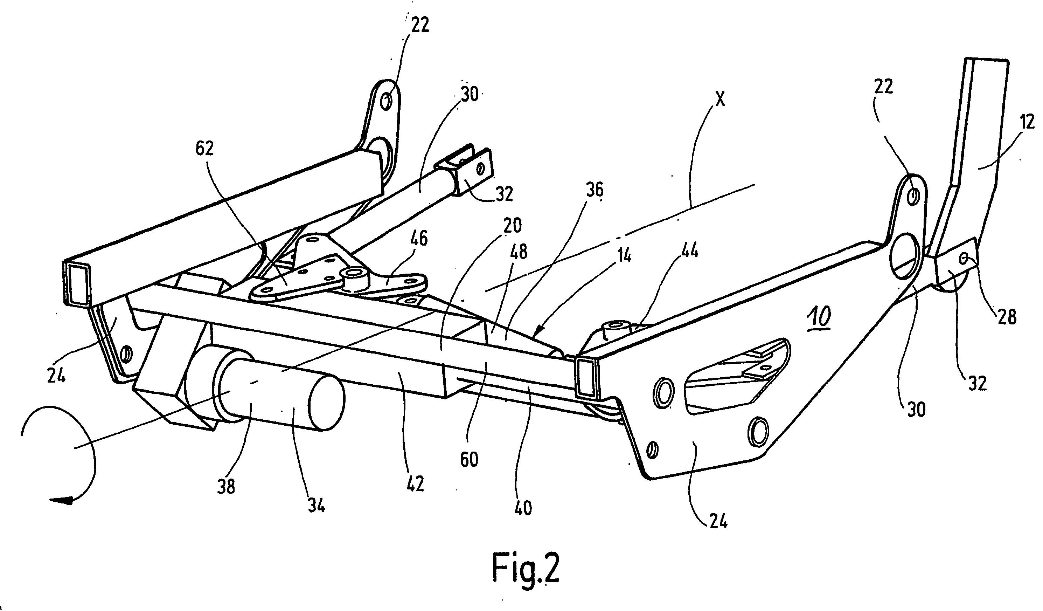

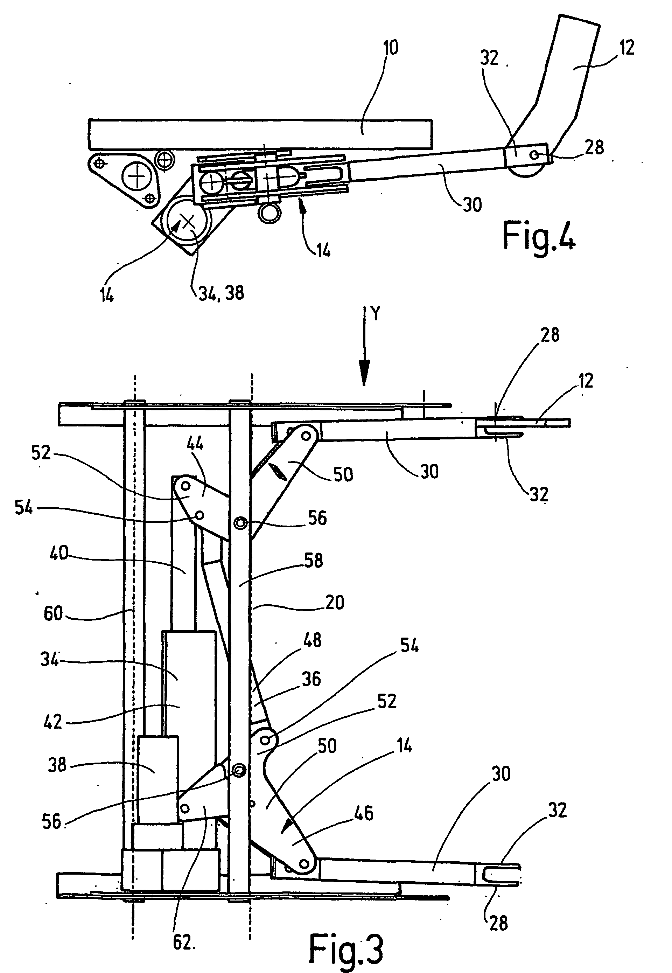

Bei der erfindungsgemäßen Ausgestaltung eines Fahrzeugsitzes nach der Fig.1 handelt es sich um einen Fluggastsitz, wie er in Reisemaschinen üblicherweise für Passagiere eingesetzt wird, wobei der besseren Darstellung wegen die Polsterteile sowie die Beinauflage für einen Sitzbenutzer weggelassen wurden. Der Fluggastsitz weist einen ersten Sitzteil 10 auf sowie ein in der Neigung einstellbares weiteres Sitzteil 12 in Form einer Rückenlehne. Die dahingehende Rückenlehne ist über eine als Ganzes mit 14 bezeichnete Betätigungseinrichtung in ihrer Neigung gegenüber dem im wesentlichen horizontal verlaufenden ersten Sitzteil 10 schwenkbar angeordnet. Das erste Sitzteil 10 ist wiederum über Ständerbeine 16 auf dem Fahrzeugboden aufständerbar, und zwar mit Hilfe von Sitzschienen 18. Wie insbesondere die Darstellung nach den Fig.2 und 3 verdeutlicht, ist der dahingehende Sitzaufbau gemäß der Darstellung nach der Fig.1 in Hintereinanderanordnung im wesentlichen zweifach vorhanden und baut dergestalt ein Sitzrahmengestell 20 auf. Der dahingehende Aufbau ist im Fluggastsitzbereich üblich, so daß an dieser Stelle hierauf nicht mehr näher eingegangen wird.

Für eine Neigungseinstellung ist die Rückenlehne 12 mit ihren Beschlagteilen um eine Schwenkachse 22 schwenkbar angeordnet, die in Seitenwangen 24 des Sitzrahmengestells 20 gelagert ist. Zur Realisierung der dahingehenden Lagerung weist die Rückenlehne 12 mit ihren beiden längsseitigen Beschlagteilen an ihrer Unterseite ein Gabelstück 26 auf, wobei sich an dem freien Ende des weiteren Gabel-Endstückes eine Anlenkstelle 28 befindet zum Ansteuern der Neigungseinstellung der Rückenlehne 12 um die eigentliche Schwenkachse 22. Der dahingehende Aufbau wird noch näher beschrieben, wobei der übersichtlicheren Darstellung wegen in den Fig.2 und 4 nur das Gabel-Endstück gezeigt ist, sofern dieses die genannte Anlenkstelle 28 betrifft. Um des weiteren eine Leichtbauweise für den Fluggastsitz zu verwirklichen, sind gemäß der Darstellung nach den Figuren sowohl in den Sitzschienen 18 als auch in den Seitenwangen 24 des Sitzes Wandstücke entsprechend ausgenommen, ohne die Struktursicherheit des Sitzes zu gefährden.

Die Betätigungseinrichtung 14 weist zwei stangenartige Einstellteile 30 auf, die mit ihrem einen freien Ende an dem weiteren Sitzteil 12 in Form der Rückenlehne über ein Gabel-Endstück 32 angreifen, das schwenkbar mit der bereits genannten Anlenkstelle 28 des jeweiligen Beschlagteils für die Rückenlehne 12 schwenkbar verbunden ist. Der besseren Darstellung wegen ist in den Fig.2 und 4'nur jeweils ein Beschlagteil der genannten Rükkenlehne 12 als weiteres Sitzteil dargestellt, wobei die derart gezeigte Anordnung auch vergleichbar für das weitere, nicht näher dargestellte Beschlagteil 12 der Rückenlehne des Fluggastsitzes gilt.

Beide stangenartigen Einstellteile 30 sind über einen gemeinsamen Antrieb 34 bewegbar, wobei für eine dahingehend gleichförmige Bewegung der beiden Einstellteile 30 eine zwischen ihnen wirkende mechanische Zwangskopplung 36 vorgesehen ist. Der Antrieb 34 besteht aus einer üblichen und mithin nicht näher beschriebenen Aktuatoreinrichtung mit einer über einen Antriebsmotor 38 längsverfahrbaren Betätigungsstange 40, die in dem Aktuatorgehäuse 42 geführt ist. Wie insbesondere die Fig.3 zeigt, greift die Betätigungsstange 40 mit ihrem freien Ende an einem ersten Winkeltrieb 44, und zwar an einem seiner freien Enden gelenkig an. Dieser erste Winkeltrieb 44 greift wiederum an seinem weiteren freien Ende gelenkig an das eine stangenartige. Einstellteil 30 an. Ferner ist der Winkeltrieb 44 mit der bereits angesprochenen mechanischen Kopplung 36 verbunden. Des weiteren ist für das andere Einstellteil 30 ein weiterer zweiter Winkeltrieb 46 vorgesehen, wobei die mechanische Kopplung 36 aus einem starren Bauteil in Form einer Kopplungsstange 48 besteht, die mit ihren jeweils freien Enden gelenkig mit den beiden Winkeltrieben 44,46 verbunden ist. Der besseren Darstellung wegen sind in der Fig.2 die Winkeltriebe 44,46 mit den Einstellteilen 30 sowie mit der Kopplungsstange 48 in der Art einer Explosionszeichnung nicht miteinander verbunden dargestellt. Dies gilt auch für die Anordnung nach der Fig.3, sofern die beiden Winkeltriebe 44,46 nicht verbunden dargestellt sind mit den freien Enden der beiden Endteile 30, die benachbart zur Anlenkstelle 28 gegenüberliegend angeordnet sind.

Bei der dargestellten Ausführungsform ist das Aktuatorgehäuse 42 starr mit dem Sitzrahmengestell 20 für das eine Sitzteil 10 verbunden, so daß nach Betätigung des Antriebsmotors 38, vorzugsweise in Form eines Elektromotors, bei stillstehendem Aktuatorgehäuse 42 die Betätigungsstange 40 je nach gewünschter Richtung ein- und ausfahren kann. Bei einer nicht näher dargestellten Ausführungsform wäre es aber auch möglich, das freie Ende des Aktuatorgehäuses 42 mit dem zweiten Winkeltrieb 46 gelenkig zu verbinden, so daß bei Betätigung des Aktuators gleichförmig die beiden Winkeltriebe 44,46 aufeinander zu oder voneinander weg geschwenkt werden. Die dahingehende gemeinsame Schwenkbewegung ist aber selbst bei einseitig festgelegtem Aktuatorgehäuse 42 jedenfalls über die mechanische Zwangskopplung 36 in Form der Kopplungsstange 48 erreicht. Auch ist insoweit jedenfalls ein synchroner Lauf beider Einstellteile 30 und mithin eine gleichförmig verlaufende Neigungseinstellung für die Rückenlehne 12 erreicht.

Der jeweilige Winkeltrieb 44,46 weist zwei Winkelarme 50,52 auf, von denen der eine Winkelarm 50 an dem zugehörigen Einstellteil 30 angelenkt ist, und der jeweils andere Winkelarm 52 weist eine Angriffsstelle 54 in gelenkiger Form für die Kopplungsstange 48 auf. Des weiteren befindet sich zwischen den beiden Armen 50,52 eines jeden Winkeitriebes 44, 46 eine Schwenkstelle 56, die eine Anlenkung der Winkeltriebe 44,46 an eine Quertraverse 58 des Sitzrahmengestells 20 ermöglicht, wobei in Blickrichtung auf die Fig.3 gesehen um die dahingehenden Schwenkstellen 56 die beiden Winkeltriebe 44,46 im und entgegen dem Uhrzeigersinn schwenkbar sind. Des weiteren ist die Angriffsstelle 54 für die Kopplungsstange 48 im Bereich des ersten Winkeltriebes 44 zwischen der Anlenkstelle der Betätigungsstange 40 und der Schwenkstelle 56 für diesen Winkeltrieb 44 angeordnet. Die Betätigungseinrichtung 40 erstreckt sich also, wie die Fig.3 zeigt, geschützt zwischen einer ersten Quertraverse 58 und einer weiteren Quertraverse 60, die wiederum parallel zur ersten Quertraverse 58 verläuft.

Des weiteren ist das Aktuatorgehäuse 42 über einen Verstärkungswinkel 62 mit der ersten Quertraverse 58 verbunden.

Des besseren Verständnisses wegen wird im folgenden die beschriebene Erfindung anhand ihrer Funktion näher erläutert. Betätigt der Sitzbenutzer einen entsprechenden Betätigungsschalter, um die Rückenlehne 12 in Richtung einer Ruhestellung zurück zu verstellen, stellt er hierbei den elektrischen Antriebsmotor 38 an und die Betätigungsstange 40 fährt in das ansonsten im Sitzrahmengestell 20 festgehaltene Aktuatorgehäuse 42 linear ein. Dabei verschwenkt der erste Winkeltrieb 44 um die Schwenkstelle 56 in der ersten Quertraverse 58 im Gegenuhrzeigersinn und der Arm 50 zieht das zugeordnete stangenartige Einstellteil 30 zurück, d.h. das Einstellteil 30 wird in Blickrichtung auf die Fig.3 gesehen von rechts nach links bewegt, so daß die Anlenkstelle 28 für das Beschlagteil der Rückenlehne 12 gleichfalls in diese Richtung gezogen wird. Der dahingehende Verschiebevorgang betrifft jedoch nicht nur das in Blickrichtung auf die Fig.3 gesehen obere Einstellteil 30, sondern auch das darunter liegende untere Einstellteil 30. Durch die Kopplungsstange 48 wird nämlich bei der Schwenkbewegung des ersten Winkeltriebes 44 entgegen dem Uhrzeigersinn diese in Blickrichtung auf die Fig.3 gesehen nach unten gedrückt und über die Angriffsstelle 54 am zweiten Winkeltrieb 46 wird dieser in Blickrichtung auf die Fig.3 gesehen im Uhrzeigersinn um die zugeordnete Schwenkstelle 56 verschwenkt. Durch die dahingehende Schwenkbewegung nimmt jedoch der Arm 50 des zweiten Winkeltriebes gleichfalls das untere Einstellteil 30 zurück, d.h. die Anlenkstelle 28 wird gleichfalls von rechts nach links verlaufend bewegt. Da mithin über die Kopplung 36 in Form der Kopplungsstange 48 die beiden Winkeltriebe 44,46 in ihrer Bewegung zwangsgeführt sind, erfolgt die dahingehende Schwenkbewegung synchron und die beiden Einstellteile 30 werden gleichförmig und gleichmäßig zur selben Zeit zurück bewegt. Da, wie bereits dargelegt, die Rückenlehne 12 um die Schwenkachse 22 verschwenkt wird, wird beim Einziehen der beiden Einstellteile 30 in das Sitzrahmengestell die Anlenkstelle 28 gleichfalls in Richtung des Sitzrahmengestells gezogen und über das jeweilige Gabel-Endstück 32 (vgl. Fig.1) verschwenkt die Rückenlehne 12 in Blickrichtung auf die Fig.1 gesehen um die Schwenkachse 22 im Uhrzeigersinn in eine mögliche Ruhelage.

Zur Umkehrung dieses Vorganges ist nach entsprechender Betätigung des Bedienschalters über den jeweiligen Sitzbenutzer der Elektroantriebsmotor 38 derart in eine Antriebsrichtung zu versetzen, daß die Betätigungsstange 40 des Aktuators ausfährt, wobei der erste Winkeltrieb 44 dann im Uhrzeigersinn verschwenkt wird, und über die mechanische Zwangskopplung in Form der Kopplungsstange 48 wird der zweite weitere Winkeltrieb 46 gleichförmig, aber in entgegengesetzter Richtung verschwenkt. Bei der dahingehenden Einstellbewegung werden dann die beiden stangenartigen Einstellteile 30 aus dem Sitzrahmengestell ausgeschoben und die Beschlagteile der Rückenlehne 12 verschwenken dank des jeweiligen Gabel-Endstückes 32 für eine Aufstellbewegung entgegen dem Uhrzeigersinn um die Schwenkachse 22, bis beispielsweise eine nahezu aufgestellte Rückenlehnenlage gemäß der Darstellung nach der Fig.1 erreicht ist.

Kommt es im Crashfall zu einer schlagartigen Rückenlehnenbelastung, bei dem der Sitzbenutzer die Rückenlehne 12 nach hinten drückt, werden die beiden Einstellteile 30 gegebenenfalls gleichfalls schlagartig in Richtung des Inneren des Sitzrahmengestells 20 eingedrückt, wobei die dann gegenläufig angestoßenen Winkeltriebe 44,46 über die mechanische Kopplung 36 (Kopplungsstange 48) gegenseitig verriegelt sind und die steif ausgelegten mechanischen Teile nehmen unmittelbar die schlagartige Crashbelastung auf, ohne daß diese in das nachgiebige Aktuator-Betätigungssystem eingeleitet werden würde. Ansonsten wird mit der Neigungseinstelleinrichtung erreicht, daß an beiden Längsseiten der Rückenlehne über die zuordenbaren Beschlagteile eine gleichförmige kontinuierliche Bewegung erfolgt, so daß eine Torsionsverwindung der Rückenlehne 12 ausgeschlossen ist und die für die Neigung vorgesehene Schwenkachse 22 ist entsprechend entlastet. Die gezeigte Neigungseinstellung braucht nicht auf die Anwendung bei Rücken lehnen eingeschränkt zu sein, sondern kann beispielsweise auch für die Beinauflage ebenso Anwendung finden, wie gegebenenfalls für eine Neigungseinstellung des eigentlichen Sitzteils 10 (nicht dargestellt). Neben der beschriebenen elektrischen Aktuatoreinrichtung können gegebenenfalls auch hydraulisch arbeitende Betätigungseinrichtungen eingesetzt werden oder Spindeltriebe. Da im letztgenannten Fall für eine lineare Ausfahrbewegung die Betätigungsstange 40 dann über ihr Schraubengewinde gedreht werden muß, ist eine entsprechende Drehführung im Bereich der Anlenkstelle des ersten Winkeltriebes 44 vorzusehen, um die Drehwegung des Spindeltriebes unmittelbar in eine Schwenkbewegung für den Winkeltrieb 44 umsetzen zu können.

## Patentansprüche

1. Sitz, insbesondere Fahrzeugsitz, vorzugsweise Fluggastsitz, mit einem ersten Sitzteil (10) und einem über eine ansteuerbare Betätigungseinrichtung (14) in der Neigung einstellbaren weiteren Sitzteil (12), wobei die Betätigungseinrichtung (14) mit mindestens zwei Einstellteilen (30) an dem weiteren Sitzteil (12) angreift, die von einem gemeinsamen Antrieb (34) bewegbar sind, wobei für eine dahingehend gleichförmige Bewegung der Einstellteile (30) zwischen diesen eine mechanische Kopplung (36) wirkt, wobei der Antrieb (34) aus einer Aktuatoreinrichtung besteht mit einem längsverfahrbaren Betätigungsteil (40), das an einem Winkeltrieb (44) angreift, der an ein Einstellteil (30) angelenkt ist und der die mechanische Kopplung (36) betätigt, und wobei für das andere Einstellteil (30) ein weiterer Winkeltrieb (46) vorgesehen ist, **dadurch gekennzeichnet, daß** der jeweilige Winkeltrieb (44,46) zwei Winkelarme (50,52) aufweist, von denen der eine Arm (50) an dem Einstellteil (30) angelenkt ist und der jeweils andere Arm (52) eine Angriffsstelle (54) für die Kopplung (36) aufweist und daß zwischen den beiden Armen (50,52) eines jeden Winkeltriebes (44,46) eine Schwenkstelle (56) mit Teilen des Sitzrahmengestells (20) besteht, um die die Winkeltriebe (44,46) schwenkbar gehalten sind.

2. Sitz nach Anspruch 1, **dadurch gekennzeichnet, daß** die mechanische Kopplung (36) aus einem starren Bauteil besteht, das mit den Winkeltrieben (44,46) gelenkig verbunden ist.

3. Sitz nach Anspruch 1 oder 2, **dadurch gekennzeichnet, daß** ein Aktuatorgehäuse (42) starr mit einem Sitzrahmengestell (20) für das eine Sitzteil (10) verbunden oder an dem weiteren Winkeltrieb (46) angelenkt ist.

4. Sitz nach einem der Ansprüche 1 bis 3, **dadurch gekennzeichnet, daß** als mechanische Kopplung (36) eine Kopplungsstange (48) vorgesehen ist, die an dem zweiten Arm (52) des jeweiligen Winkeltriebes (44,46) angreift und daß das Ende der Kopplungsstange (48), das an dem einen Winkeltrieb (44) angreift, den Angriff zwischen der Schwenkstelle (56) und der Angriffsstelle (54) der Betätigungsstange (40) an diesem Winkeltrieb (44) vornimmt.

5. Sitz nach einem der Ansprüche 1 bis 4, **dadurch gekennzeichnet, daß** die Schwenkstellen (56) der Winkeltriebe (44,46) auf einer gemeinsamen Quertraverse (58) des Sitzrahmengestells (20) angeordnet sind, die parallel zur Verfahrachse des Aktuators sich erstreckt, und die quer zu zwei Seitenwangen (24) des Sitzrahmengestells (20) verläuft, längs deren sich die Einstellteile (30) für die Rückenlehne als weiteres Sitzteil (12) erstrecken.

6. Sitz nach Anspruch 5, **dadurch gekennzeichnet, daß** die Einstellteile (30) als Einstellstangen ausgebildet sind, die mit ihrem einen freien Ende an den jeweils ihnen zugeordneten Winkeltrieben (44,46) angreifen und mit ihrem anderen freien Ende jeweils an ein Beschlagteil, das zumindest teilweise sich entlang den Längsseiten der Rückenlehne (12) erstreckt.

7. Sitz nach Anspruch 5 oder 6, **dadurch gekennzeichnet, daß** die Betätigungseinrichtung (14) sich zwischen der einen (58) und einer weiteren Quertraverse (60) des Sitzrahmengestells (20) erstreckt und daß die Betätigungseinrichtung (34) mit einem Antriebsmotor (38) versehen ist.

## Claims

1. Seat, especially a vehicle seat, preferably an aeroplane passenger seat, with a first seat part (10) and a further seat part (12), the incline of which is adjustable by means of a controllable activating means (14), whereby the activating means (14) engages the further seat part (12) with at least two adjustment components (30) which can be moved by a common drive (34), whereby a mechanical coupling (36) acts between the same for a similar movement of the adjustment components (30), and whereby the drive (34) consists of an actuator means with a longitudinally displaceable activating part (40) which engages an angled drive (44), the same being affixed to an adjustment component (30) and operating the mechanical coupling (36), and whereby a further angled drive (46) is envisaged for the other adjustment component (30), **characterised in that** the relevant angled drive (44, 46) incorporates two angled arms (50, 52) of which the one arm (50) is affixed to the adjustment component (30), and the relevant other arm (52) incorporates a fitment point (54) for the coupling (36), and **in that** a tilt point (56) with parts of the seat frame (20) exists between the two arms (50, 52) of each angled drive (44, 46) in order to tiltably hold the angled drives (44, 46).

2. Seat according to Claim 1, **characterised in that** the mechanical coupling (36) consists of a rigid component which is jointably connected with the angled drives (44, 46).

3. Seat according to Claim 1 or 2, **characterised in that** an actuator housing (42) is rigidly connected with a seat frame (20) for the one seat part (10), or affixed to the further angled drive (46).

4. Seat according to one of the Claims 1 to 3, **characterised in that** a coupling rod (48) is envisaged as the mechanical coupling (36), which is affixed to the second arm (52) of the relevant angled drive (44, 46), and **in that** the end of the coupling rod (48) that is affixed to the one angled drive (44) is also affixed between the tilt point (56) and the fitment point (54) of the activating rod (40) at this angled drive (44).

5. Seat according to one of the Claims 1 to 4, **characterised in that** the tilt points (56) of the angled drives (44, 46) are positioned along a common cross traverse (58) of the seat frame (20) which extends parallel to the displacement axis of the actuator, and which extends transverse to the two side cheeks (24) of the seat frame (20), along which the adjustment components (30) for the back rest extend as a further seat part (12).

6. Seat according to Claim 5, **characterised in that** the adjustment components (30) take the form of adjustment rods which are affixed to the relevant associated angled drive (44, 46) with their one free end, and to a relevant fitment part, which extends at least in part along the longitudinal side of the back rest (12) with their other free end.

7. Seat according to Claim 5 or 6, **characterised in that** the activating means (14) extends between the one (58) and a further cross traverse (60) of the seat frame (20), and **in that** the activating means (34) is equipped with a drive motor (38).

## Revendications

1. Siège, en particulier siège pour passager, de préférence siège pour avion, comportant une première partie de siège (10) et une autre partie de siège (12) variable en inclinaison au moyen d'un dispositif de manoeuvre (14) apte à être actionné, le dispositif de manoeuvre (14) entrant en prise avec l'autre partie de siège (12) par au moins deux éléments de réglage (30), qui sont mobiles par l'intermédiaire d'un système d'entraînement (34) commun, un couplage mécanique (36) agissant entre les deux éléments de réglage (30) pour assurer un mouvement homogène de ceux-ci, le système d'entraînement (34) étant formé par un actionneur muni d'un élément d'actionnement (40), qui est mobile longitudinalement et entre en prise avec un élément de manoeuvre angulaire (44), qui est articulé contre un élément de réglage (30) et qui actionne le couplage mécanique (36), et un autre élément de manoeuvre angulaire (46) étant prévu pour l'autre élément de réglage (30), **caractérisé en ce que** chaque élément de manoeuvre angulaire (44, 46) comporte deux bras angulaires (50, 52), dont l'un des bras (50) est articulé contre l'élément de réglage (30) et dont l'autre bras (52) comporte une zone de prise (54) pour le couplage (36) et **en ce que**, entre les deux bras (50, 52) de chacun des éléments de manoeuvre angulaires (44, 46), est réalisé un point de pivotement (56) avec des parties du châssis du siège (20), autour duquel les éléments de manoeuvre angulaires (44, 46) sont maintenus pivotants.

2. Siège selon la revendication 1, **caractérisé en ce que** le couplage mécanique (36) est formé par un élément rigide, qui est assemblé de manière articulée avec les éléments de manoeuvre angulaires (44, 46).

3. Siège selon la revendication 1 ou 2, **caractérisé en ce qu'**un boîtier pour actionneur (42) est assemblé de manière rigide à un châssis de siège (20) pour l'une des parties de siège (10) ou est articulé contre l'autre élément de manoeuvre angulaire (46).

4. Siège selon l'une quelconque des revendications 1 à 3, **caractérisé en ce que** le couplage mécanique (36) est prévu sous forme de tige de couplage (48), qui entre en prise avec le deuxième bras (52) de l'élément de manoeuvre angulaire (44, 46) concerné et **en ce que** l'extrémité de la tige de couplage (48), qui entre en prise avec l'un des éléments de manoeuvre angulaires (44), assure la prise entre le point de pivotement (56) et la zone de prise (54) de la tige de manoeuvre (40) contre cet élément de manoeuvre angulaire (44).

5. Siège selon l'une quelconque des revendications 1 à 4, **caractérisé en ce que** les points de pivotement (56) des éléments de manoeuvre angulaires (44, 46) sont agencés sur une traverse (58) commune du châssis de siège (20), laquelle est parallèle à l'axe de déplacement de l'actionneur et est transversale aux deux joues latérales (24) du châssis de siège (20), le long desquelles s'étendent les éléments de réglage (30) pour le dossier formant l'autre partie de siège (12).

6. Siège selon la revendication 5, **caractérisé en ce que** les éléments de réglage (30) sont conçus sous forme de tiges de réglage qui entrent chacune en prise par leur extrémité libre avec l'élément de manoeuvre angulaire (44, 46) qui leur est associé et par leur autre extrémité libre respectivement avec une ferrure qui s'étend au moins partiellement le long des côtés longitudinaux du dossier (12).

7. Siège selon la revendication 5 ou 6, **caractérisé en ce que** le dispositif de manoeuvre (14) s'étend entre ladite traverse (58) et une autre traverse (60) du châssis du siège (20) et **en ce que** le dispositif de manoeuvre (34) est muni d'un moteur d'entraînement (38).
